# EUROPEAN PATENT SPECIFICATION

(11) **EP 3 683 371 B1**
(45) Date of publication and mention of the grant of the patent: **16.08.2023**
(21) Application number: 19020550.0
(22) Date of filing: 01.10.2019
(51) Int. Cl.: E03F 5/02, E02D 29/12, B29C 63/28, B29C 63/34

(54) **LINER DRAIN FOR REPAIRING CONCRETE DRAIN**
AUSKLEIDUNG ZUR REPARATUR VON BETONABLÄUFEN
REVÊTEMENT POUR LA RÉPARATION D'UN DRAIN EN BÉTON

(30) Priority: 03.10.2018 FI 20187142
(43) Date of publication of application: 22.07.2020
(73) Proprietor: Hämäläinen, Sami, 00930 Helsinki (FI)
(72) Inventor: Hämäläinen, Sami, 00930 Helsinki (FI)
(74) Representative: Sach, Greg Robert

(56) References cited:
- EP-A1- 0 592 115
- JP-A- 2000 211 027
- US-A- 5 106 440
- US-A- 5 490 744

## Description

Area of technology: an invention relates to repairing storm drains, yard drains, inspection chambers, or other drains made of concrete; the invention further relates to liner members and renovation drains to be used in pipeline renovations.

### Background of the technology

A storm drain (or storm sewer) is used for collecting rain water or storm water. The storm drain is situated such that rain water flows into the storm drain. Water rained on a roof is led to gutters and then from the gutters via tubing into a yard drain. The water is led from the yard drain, for example, into a municipal storm drainage system. A yard drain receives either storm water or sewer water. Especially on old residential areas, the drain water and the sewer water are led into the same piping system.

A drain to be repaired is assumed to include mostly concrete and thus it is termed a "concrete drain". If the concrete drain is part of a sewage system, the concrete drain may have on its bottom one or more chutes made of concrete. If the concrete drain is a part of a storm drainage system, it usually has a sediment chamber at its bottom.

The concrete drain can be repaired by cleaning its inner surface and re-covering the inner surface with concrete. The re-covering of the inner surface, however, includes a lot of manual work, which makes the renovation method expensive.

Epoxy spaying is another known renovation method but the epoxy spraying suits poorly for a concrete drain because epoxy does not properly stick to wet concrete, and drying of the concrete drain takes a lot of time.

A renovation drain is a third known renovation method for a concrete drain. The renovation drain is made of plastic and its diameter is less than the diameter of the concrete drain to enable its assembly inside the concrete drain. First, holes are made on the sides of the renovation drain for drain bushings. The pipes incoming into the concrete drain and the pipes outgoing from the concrete drain are coupled through the drain bushings to the renovation drain. Then the renovation drain is attached to the concrete drain with concreting or with gravel substance.

Lining is a fourth known renovation method for a concrete drain. Liner to be used in it includes porous material, such as felt, and restorative material such as PVC (polyvinyl chloride). The liner is impregnated with an impregnating compound including epoxy or some other type of resin. After hardening of the compound the liner forms a durable lining inside the concrete drain. The lining (product) is termed a "liner drain".

A top hat is such liner that has a collar part and a pipe-type of part to be placed inside a pipe. The top hat liner is intended to seal a joint between the liner drain and the pipe coupled to the liner drain. A top hat and the liner drain are prepared with compound when assembling them.

A preliner is a tool to be used in lining. One purpose of the preliner is to function as a mold against which a liner gets squeezed. This kind of mold is needed, for example, when corrosion has created holes to a cast iron pipe to be repaired. A bladder (or an inner liner) is a pressurizing tool to be placed inside a liner. The bladder squeezes the liner against a preliner or some other mold. The manufacturing material of the bladder (or the inner liner) is silicone, or some other material to which the compound does not stick.

A problem of the prior art relates to a durability of the moisture insulation in a concrete drain. It is obvious that sewer water should not get into soil. If the concrete drain is a part of a sewer system, storm water should not end into the sewer system, because then the amount of the water to be processed may increase too much compared to the cleaning capacity of the system. If the concrete drain is a part of a storm water system, the water absorbed in the soil should not enter into the storm water system because that could cause floods on the area. Concreting the inner surface of the concrete drain is a short-term solution, if traffic vibration (or some other reason) breaks again the moisture insulation.

A second problem of the prior art relates to a situation in which the pipes connecting concrete drains are repaired by lining and the concrete drains are repaired by a liner drain. A concrete drain may be deep or broad due to which the liner drain to be assembled into the concrete drain must be large-sized. The large-size liner product, however, requires a great amount of compound, which increases costs. Therefore, the expensiveness is a drawback of the liner drain.

A third problem of the prior art concerns combining different renovation methods, in other words, it should be possible to use at least two different methods for repairing a concrete drain.

The renovation methods based on use of a liner drain represent the closest prior art. US5490744 describes a liner that is pressurized with air and hardened with steam, and it further describes a plug for closing the liner mouth.

US5106450 describes another liner product for repairing a concrete drain such that the liner is pressurized with air. US2016023735 describes a lining method that is based on use of a bladder and a preliner. US2002071723 describes an acid resistant liner drain. US6634828 describes a liner drain that is assembled using a mold made of rubber. The following publications concern assembly without a liner. GB1537242 describes drain parts which are moveable in a telescopic manner in relation to each other. SE459591 shows a flexible bag part and a telescopic part coupled to the bag part.

### Summary of the invention

An aspect of the invention is to solve the above mentioned prior art problems in repairing of a concrete drain.

Another aspect of the invention is to use in lining such liner that fills only partly the concrete drain to be repaired. Then a liner is smaller in size and cheaper than a drain-sized of liner, which means that it requires less the compound. The pipes coupled to a concrete drain are often located at a lower part in the concrete drain. Thus it is enough that the bottom and the lower part of the drain wall are lined with a liner product.

Another aspect of the invention is to repair the upper part of the concrete drain in a different manner than the lower part of the concrete drain. For example, cost savings argue the use of different renovation methods.

The invention concerns a liner drain intended for repairing a concrete drain, according to claim 1.

The invention further concerns a drain arrangement in which the above described liner drain product is utilized.

### Brief description of the drawings

For a more complete understanding of examples and embodiments of the present invention, reference is now made to accompanying drawings in which:
FIGURE 1A shows **a** drain liner in which a collar and a bushing are included in the same piece.
FIGURE 1B shows an upper part of a drain liner, wherein a collar is formed of a liner.
FIGURE 1C shows an upper part of a drain liner and a separate collar.
FIGURE 2 shows assembly examples of a drain liner.
FIGURE 3 shows a drain liner that is narrower than a concrete drain to be repaired.
FIGURE 4 shows a telescope pipe to be attached to a liner bushing.
FIGURE 5 shows examples of an inspection lid to be attached to a liner bushing.
FIGURE 6A shows a renovation drain to be attached to a liner bushing.
FIGURE 6B shows another example of a renovation drain and a seal.
FIGURE 7 shows a drain arrangement for repairing a concrete drain.
FIGURE 8 shows examples of a drain arrangement including a liner drain.
FIGURE 9 shows an example of a liner drain and a renovation drain.

### Detailed description of the invention

It is appreciated that the following embodiments are exemplary. Although the specification may refer to "one" embodiment, the reference is not necessarily made to the same embodiment(s), or the feature in question may apply to multiple embodiments.

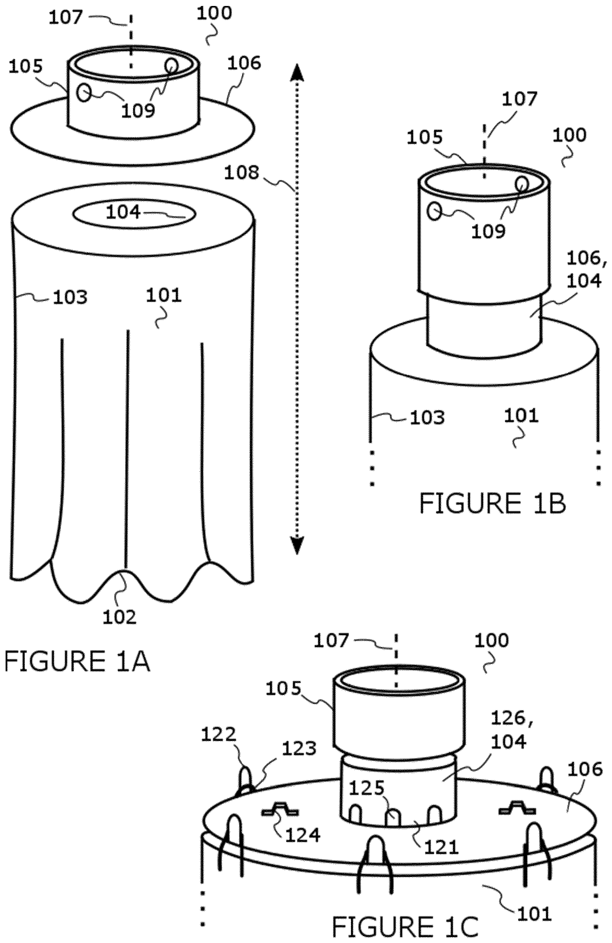

**FIGURE 1A** shows as separate components a liner drain 100 that is intended for repairing a concrete drain. In this figure and the following two figures liner drain 100 is shown before its assembly. Liner drain 100 is a product comprising a liner 101 to be impregnated with compound. Liner 101 has a shape of bag and it comprises a bottom 102, a wall 103, and a liner mouth 104.

In one embodiment, bottom 102 of liner 101 is intended to be placed against the bottom of the concrete drain (not shown). In another embodiment, liner 101 is intended to be placed inside a pipe, wherein the diameter of the pipe is smaller than the diameter of the concrete drain.

In the assembly stage of liner drain 100 liner 101 is pressurized with fluid through liner mouth 104. Air, water, and water vapor are examples of the fluid intended for the pressurizing. Liner drain 100 further comprises a bushing 105, which retains its shape, and a collar 106. Bushing 105 is attachable with collar 106 to liner 101. Liner mouth 104 is located at bushing 105 and it forms together with bushing 105 an inlet 107 into liner 101.

Before assembling liner drain 100 into a concrete drain, liner 101 is permanently adhered to collar 106 around liner mouth 104. Compound, clue, or silicone suits for attaching liner 101 to collar 106. Liner 101 is pressurized through inlet 107 in the assembly stage of liner drain 100. Liner 101 has such dimensioning that a distance 108 from bottom 102 of liner 101 to bushing 105 is less than a distance from the bottom of the concrete drain to the mouth of the concrete drain.

In one embodiment bushing 105 includes lifting holes 109 such that the end of a rope can be led through lifting holes 109. Liner drain 100 is lifted up by using the rope after which it is put down into the concrete drain to be repaired.

In figure 1A, collar 106 and bushing 105 are made of the same material. Plastic material such as PVC (polyvinylchloride) or PE (polyethylene), or metal such as aluminum or stainless steel apply for the manufacturing. The surface between collar 106 and liner 101 is quite large and thus clue (or some corresponding product) can be spread thereat in order to result in a durable joint. In another embodiment, the wall of bushing 105 is so thick that the intersection surface at the end of bushing 105 operates as collar 106 against which liner 101 is attachable.

**FIGURE 1B** shows an upper part of liner drain 100, wherein collar 106 is formed of liner 101. Liner 101 is sewed such that its bottom is approximately as large as the bottom of the concrete drain to be repaired. Wall 103 of liner 101 is intended to be placed against the wall of the concrete drain.

In order to save compound, wall 103 of liner 101 covers only the lower part of the concrete drain wall. Bushing 105 and liner mouth 104 in collar 106 operate as inlet 107 into liner 101. Lifting holes 109 formed to bushing 105 are intended for lifting liner drain 100 up to air and putting it down inside the concrete drain.

**FIGURE 1C** shows an upper part of liner drain 100, wherein collar 106 is a separate piece. In other words, collar 106 is not a part of bushing 105 and not a part of liner 101. For example, galvanized plate suits for the manufacturing material of collar 106. Collar 106 includes a collar hole 121 for inlet 107 (collar hole 121 is not visible). Collar has fastening projections (made of galvanized plate) on its outer edge, such as a fastening projection 122. The fastening projections are intended for attaching collar 106 to the wall of the concrete drain to be repaired. Each fastening projection can be attached with a nail of a nail gun to the wall of the concrete drain. Another purpose of the fastening projections is to support liner 101 when liner 101 is lift up and put down into the concrete drain. One loop is sewed to liner 101 for each fastening projection. For example, fastening projection 122 supports liner 101 at a loop 123. Liner 101 further comprises lifting handles, such as a lifting handle 124, for lifting liner 101 up and putting it down.

Collar 106 has around a collar hole 121 holders, such as holder 125, for bushing 105. A branch 126 included in liner 101 projects through collar hole 121 and branch 126 operates as liner mouth 104. Bushing 105 is put down on collar 106 such that holder 125 and the other holders hold bushing 105 in its place against collar 106. In the same time, branch 126 is set against the inner surface of bushing 105.

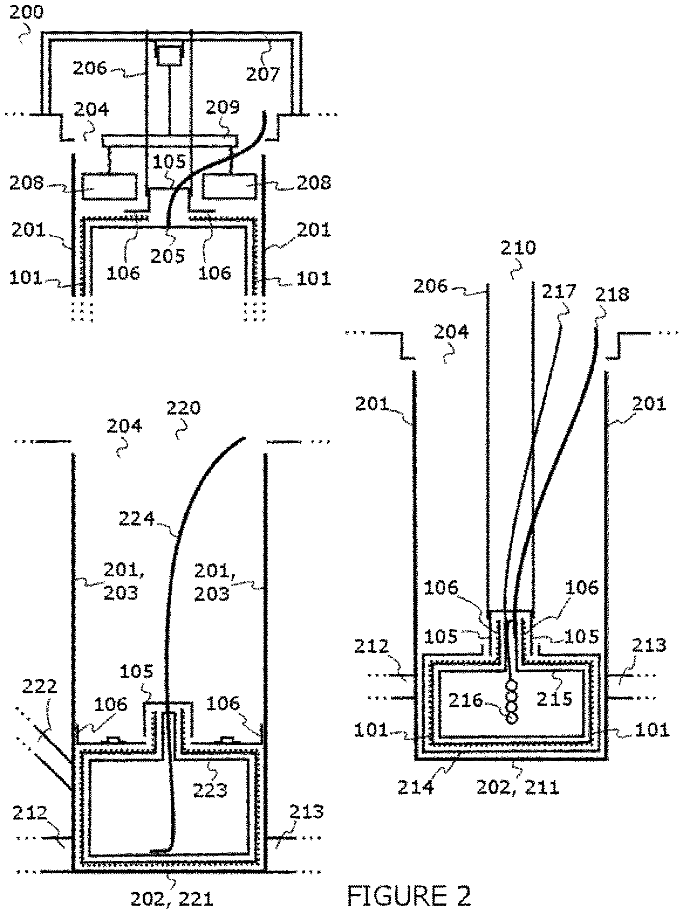

**FIGURE 2** shows in a first view 200, a second view 210, and in a third view 220 examples of pressurizing liner 101 during its assembly. The examples are cross-section figures and, in addition to the assembly methods, they illustrate structure alternatives for liner drain 100. Due to presentation reasons, some objects in figure 2 are shown as separate objects even though, for example, liner 101 and a concrete drain 201 are squeezed against each other because of the pressurizing. Main parts of concrete drain 201 are: a drain bottom 202, a drain wall 203, and a drain mouth 204. In the all three views (200, 210, 220) the distance from bottom 102 of liner 101 to bushing 105 is less than the distance from drain bottom 202 to drain mouth 204.

First view 200 shows liner drain 100 (of figure 1A) when liner drain 100 is currently put down into concrete drain 201 to be repaired. Concrete drain 201 is a storm drain and only its upper part is visible. Before the assembly, liner 101 has been attached, for example, with compound to the under surface of collar 106. Porous material (marked with a dotted line) in liner 101 forms the outer surface of liner 101 and restorative material (marked with a continuous line) forms the inner surface of liner 101. Compound to be used in the assembly has been impregnated, for example, on a table, into the outer surface of liner 101 i.e. into the porous material. Then a bladder 205 with a pneumatic hose has been pushed through bushing 105 inside liner drain 100. A rope 206 to be used in lifting of liner drain 100 passes through lifting holes (not shown). Rope 206 is supported by a support structure 207 above drain mouth 204. Support structure 207 and a (round-shaped) concrete lid 208, whose diameter is less than the diameter of concrete drain 201, are utilized in the assembly of liner drain 100. The hole in the middle of concrete drain 208 is greater than the diameter of bushing 105 so that concrete lid 208 can be put down on collar 106. Concrete lid 208 prevents collar 106 to lift up when bladder 205 is pressurized by air or steam. The under surface of concrete lid 208 is covered with silicone or some corresponding material to which the compound does not stick.

Support structure 207 comprises an electric winch for lifting up and putting down concrete lid 208. A wire rope of the electric winch is attached to a bar 209 and bar 209 is attached at its ends to concrete lid 208.

Second view 210 illustrates the assembly of liner drain 100 (of figure 1B) into concrete drain 201. In second view 210, concrete drain 201 is a storm drain that includes a sediment chamber 211. Sediment chamber 211 is the part of concrete drain 201 extending in concrete drain 201 from drain bottom 202 to an inlet pipe 212 and an outlet pipe 213. A preliner 214 is attached at its mouth with a clamp ring (not shown) to bushing 105. The stages preceding the assembly of liner 101 are partly similar as in the above. Liner 101 is first prepared with compound and then liner 101 is pushed inside preliner 214, after which a bladder 215 is pushed inside liner 101.

Conversely than bladder 205 (in first view 200), bladder 215 extends into bushing 105 and squeezes collar 106 formed of liner 101 against bushing 105. Bladder 215 includes a blue light device 216 with an electric wire 217. Blue light device 216 will harden with blue light the compound included in liner 101. When bladder 215 is pressurized with fluid, preliner 214 prevents an excessive expanding of liner 101 towards drain mouth 204. After the hardening of the compound, bladder 215 is emptied by letting fluid flow out via a hose 218. Then bladder 215 is removed inside of liner 101 by pulling from hose 218.

Third view 220 shows liner drain 100 (of figure 1C) when it is put down into concrete drain 201 to be repaired. In this example concrete drain 201 is a sewer drain whose drain bottom 202 includes a concrete chute 221. Concrete chute 221 couples inlet pipe 212 of concrete drain 201 to outlet pipe 213. Also another inlet pipe 222, to which liner 101 extends from drain bottom 202, is coupled to concrete drain 201. Collar 106 is permanently attached to drain wall 203 and bushing 105 rests on collar 106. Water is led via a water hose 224 into a bladder 223 to pressurize liner 101. Warm water speeds up the compound hardening. Water hose 224 is attached to the mouth of bladder 223 and its end extends to the bottom of bladder 223. When liner 101 is hardened, water is pumped out from bladder 223 via water hose 224. Then bladder 223 is removed from liner 101 by pulling from water hose 224.

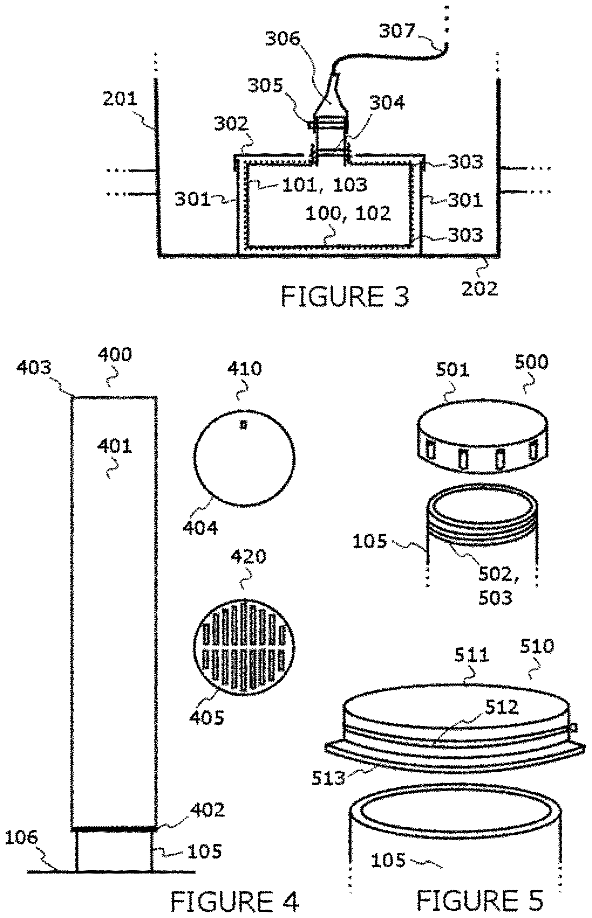

**FIGURE 3** shows liner drain 100 that is narrower than concrete drain 201 to be repaired. In the before-shown embodiments wall 103, which is attached to bottom 102 of liner 101, is intended to be assembled against the inner surface of concrete drain 201.

In the embodiment of figure 3, wall 103 attached to bottom 102 of liner 101 is intended to be assembled against an assembly mold 301, wherein assembly mold 301 rests on drain bottom 202.

Any of the liner drains shown in figure 1A, 1B, or 1C can be implemented such that, instead of pressurizing liner drain 100 against the concrete drain to be repaired, liner drain 100 is pressurized against assembly mold 301. A benefit of this embodiment is a material saving, i.e. a smaller amount of compound is needed. The cross-section of assembly mold 301 is, for example, a circle or a square and assembly mold 301 is made e.g. of plastic or galvanized plate.

In one embodiment bottom 102 of liner 101 is intended to be placed against drain bottom 202. An assembly mold is also used in this embodiment.

In one embodiment it is possible to attach a deck part 302 to the end of assembly mold 301. Deck part 302 is made e.g. of plastic and its attaching method is, for example, such that the edge of deck part 302 is attached with screws to assembly mold 301.

In the previous examples a bladder (such as bladder 205) is used for pressurizing liner 101. The bladder is not needed, if the stitches of liner 101 are done such that no significant amount of fluid leaks through the stitch holes. In figure 3 the stitches are covered with pieces of tape 303 at the inner surface of liner 101 to seal liner drain 100. A branch included in liner 101 is folded and this two-folded branch operates as the collar of liner 101. The collar is permanently attached with a band 304 to bushing 105 and bushing 105 is attached with a clamp ring 305 to the broad end of a rubber funnel 306. The narrow end of rubber funnel 306 is clued to the end of a pneumatic hose 307. Liner 101 is pressurized through pneumatic hose 307 such that liner 101 is hardened against (drain bottom 202 and) assembly mold 301 and deck part 302.

**FIGURE 4** shows in three views examples of a telescope pipe 401 to be attached to bushing 105 of liner drain 100.

A first view 400 shows telescope pipe 401 and bushing 105 from side, wherein bushing 105 penetrates into telescope pipe 401. A rubber seal 402 is attached to an end of telescope pipe 401 into which bushing 105 is penetrating. Rubber seal 402 is located between the lifting holes (not shown) and collar 106. Due to rubber seal 402, the diameter of telescope pipe 401 is narrowed at its end and thus rubber seal 402 makes the joint between telescope pipe 401 and bushing 105 watertight. The other end 403 of telescope pipe 401 extends to the ground surface and is coverable with some lid. The diameter of telescope pipe 401 or the diameter of bushing 105 (or the both diameters) can be selected such that telescope pipe 401 will penetrate inside bushing 105 in their joint point.

A second view 410 shows from a bird's perspective a solid cover 404 to telescope pipe 401. Solid cover 404 can be used, for example, in an inspection drain.

A third view 420 shows from a bird's perspective a grate cover 405 to telescope pipe 401. Grate cover 405 is intended for storm drains and it includes slits through which water enters into telescope pipe 401.

**FIGURE 5** shows examples of an inspection lid 501 to be attached to bushing 105 of liner drain 100.

In a first view 500, liner drain 100 comprises inspection lid 501 and thus pipes can be inspected by opening inspection lid 501. If needed, the pipes are cleaned via bushing 105. Inspection lid 501 is made e.g. of plastic and it operates as a screw top. In more detail, the threads formed to inspection lid 501 fit into the threads formed to the upper end of bushing 105. Bushing 105 is too small-sized for a human being but, for example, a sewer cleaner with cleaning cable fits into it.

In a second view 510, an inspection lid 511 applies to such (large-sized) bushing 105 through which a human being can pass. Inspection lid 511 is made e.g. of rubber or plastic and it covers the upper end of bushing 105. Inspection lid 511 is attachable with a clamp ring 512 around bushing 105. Inspection lid 511 has an edge 513 intended for detaching inspection lid 511.

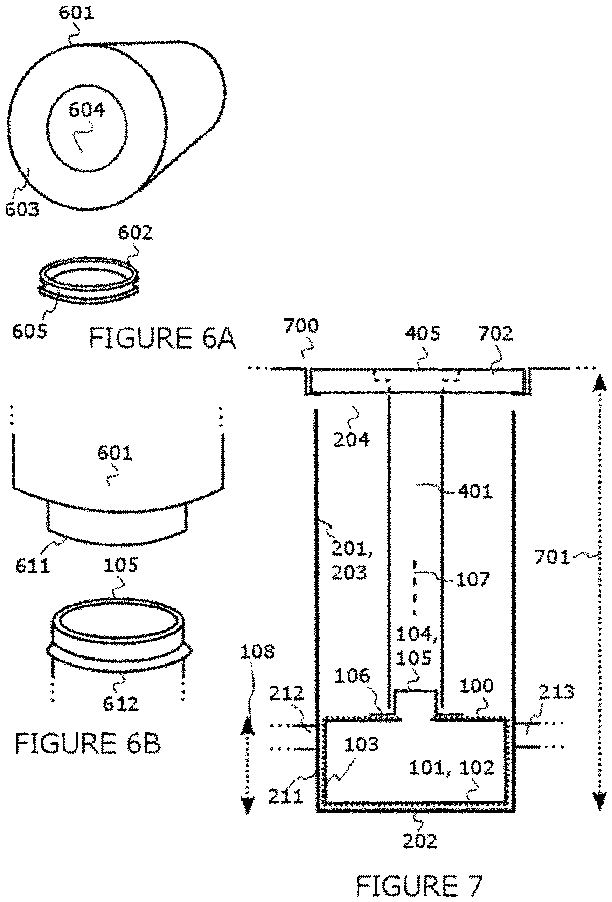

**FIGURE 6A** shows a renovation drain 601 to be attached to bushing 105 of liner drain 100. Figure 6A further shows a seal 602 for renovation drain 601.

Renovation drain 601 is in a horizontal position and its bottom 603 is visible. It is possible to make a hole 604 to bottom 603 already in the manufacturing stage of renovation drain 601. Alternatively, a technician makes later an appropriate hole to renovation drain 601. Seal 602 is a rubber ring that has a groove 605 on its outer surface and groove 605 continues around the rubber ring. Diameter of seal 602 at the bottom of groove 605 is the same as the diameter of hole 604. Seal 602 is intended to be assembled to renovation drain 601 such that the edge of hole 604 sets into groove 605. When the technician puts renovation drain 601 down onto a bushing (not shown), seal 602 makes the joint between renovation drain 601 and the bushing watertight.

**FIGURE 6B** shows another example of sealing of renovation drain 601. Only the lower part of renovation drain 601 is visible and a drain bushing 611 is formed at the bottom of renovation drain 601. The diameter of drain bushing 611 is slightly larger than the diameter of bushing 105 included in the liner drain. Bushing 105 comprises a rubber ring operating as a seal 612.

The rubber ring is tensioned and thus it adheres to a groove formed to bushing 105. Bushing 105 is intended to be placed inside drain bushing 611 included in renovation drain 601, after which seal 612 makes the joint between bushing 105 and drain bushing 611 watertight.

**FIGURE 7** shows a drain arrangement 700 for repairing of concrete drain 201. Drain arrangement 700 comprises liner drain 100 and liner 101 to be impregnated with compound. Bottom 102 of liner 101 is placed against drain bottom 202, and wall 103 of liner 101 is placed against drain wall 203. Liner 101 has liner mouth 104 at its end that is directed towards drain mouth 204. Liner drain 100 included in drain arrangement 700 further comprises bushing 105 retaining its form and collar 106 for attaching bushing 105 to liner 101. Liner mouth 104 is located at bushing 105 and it forms together with bushing 105 inlet 107 into liner 101. Collar 106 adheres to liner 101 around liner mouth 104. Liner 101 has such dimensioning that a distance 108 from bottom 102 of liner 101 to bushing 105 is less than a distance 701 from the bottom of the concrete drain to the mouth of the concrete drain. In figure 7, liner drain 100 is the same product as in figure 1A and as in first view 200 of figure 2.

Concrete drain 201 operates a storm drain and it includes a sediment chamber 211. Sediment chamber 211 extends from drain bottom 202 to inlet pipe 212 and outlet pipe 213 of concrete drain 201.

In one embodiment drain arrangement 700 comprises telescope pipe 401 attached to bushing 105 and grate cover 405 for telescope pipe 401. In addition to a pipe-type of part, telescope pipe 401 comprises a cover slab 702. Cover slab 233 has a recess for grate cover 405. The pipe-type of part of telescope pipe 401 is made e.g. of plastic and cover slab 702 and grate cover 405 are made e.g. of cast iron. Telescope pipe 401 extends to cover slab 702 which rests on the ground surface. Because telescope pipe 401 can move vertically in relation to liner drain 100, minor altitude changes of the ground surface don't break liner drain 100.

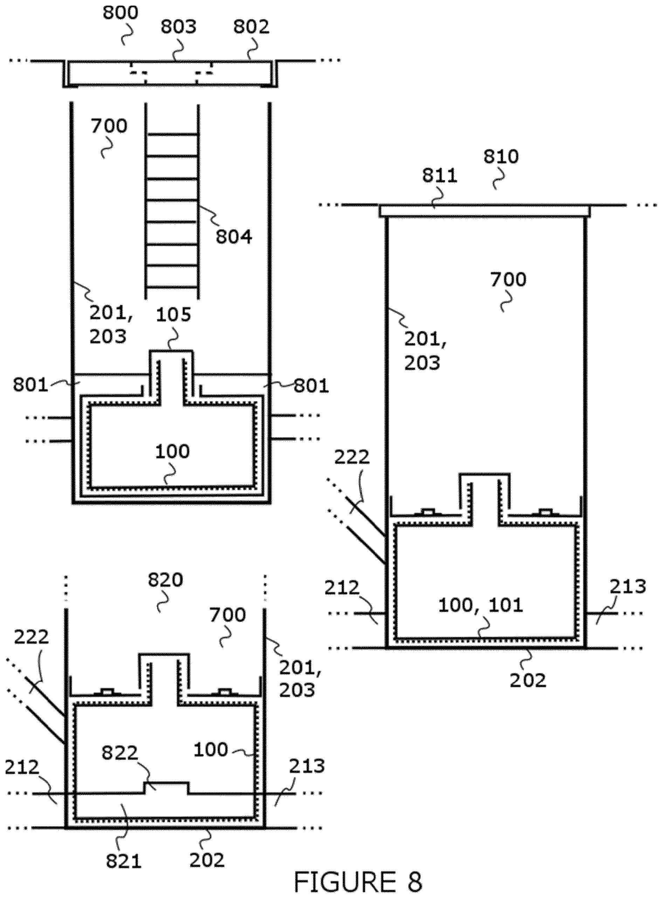

**FIGURE 8** shows in three views three examples of drain arrangement 700 for repairing a concrete drain with liner drain 100. A first view 800 concerns an inspection drain, and a second view 810 and a third view 820 concern a sewer drain.

In first view 800, liner drain 100 is the product shown in figure 1B and the liner drain 10 is placed into concrete drain 201 shown in second view 210 in figure 2. In addition to liner drain 100, drain arrangement 700 comprises a deck 801 added to concrete drain 201, wherein deck 801 is located between bushing 105 and drain wall 203. Concrete drain 201 comprises a drain cover 802 which has a recess for a solid cover 803. A sewer inspector can get down on deck 801 by using ladders 804 attached to drain wall 203. Deck 801 bears the weight of a human being, thus the sewer inspector can stand on deck 801 and perform inspection and maintenance tasks through bushing 105. In this example deck 801 is made of foam concrete.

In second view 810, liner drain 100 is the product shown in figure 1C and also in third view 220 of figure 2. The mouth of concrete drain 201 is covered in drain arrangement 700 with a lid 811. In addition to inlet pipe 212 and outlet pipe 213, concrete drain 201 comprises inlet pipe 222 that is coupled, for example, to a yard drain. Even if liner 101 extends from drain bottom 202 to inlet pipe 222, liner 101 fills only one third of the volume of concrete drain 201, which reduces the material costs.

Third view 820 comprises the lower parts of liner drain 100 and concrete drain 201 (the upper part of concrete drain is similar as in second view 810). Liner drain 100 is the product which is shown in figure 1C and which is assembled in concrete drain 201 including a liner member 821. Liner member 821 couples inlet pipe 212 to outlet pipe 213 in drain arrangement 700 and it enhances the flowing features of concrete drain 201. Liner drain 100 extends to drain bottom 202 and it spreads to the both sides of liner member 821. Liner member 821 and liner drain 100 are placed into concrete drain 201 such that liner member 821 is placed first and then liner drain 100. Lastly, a hole is made into the bottom of liner drain 100 at the location of a third branch 822 of liner member 821 such that sewage can flow from liner drain 100 via third branch 822 to outlet pipe 213.

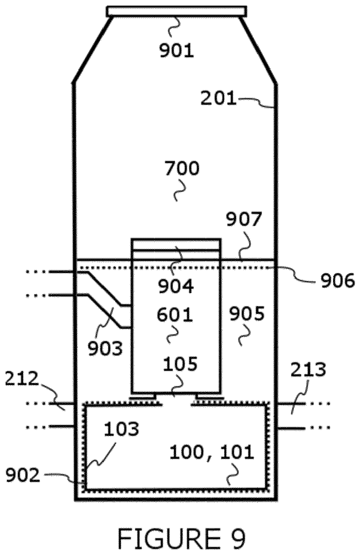

**FIGURE 9** shows an example of drain arrangement 700 comprising liner drain 100 and renovation drain 601. Concrete drain 201 operating as a yard drain tapers from its upper part and it comprises a drain cover 901 and a sediment chamber 902. Drain arrangement 700 includes such liner drain 100, which fills sediment chamber 902, and renovation drain 601 attached to bushing 105 of liner drain 100. Liner drain 100 has holes for inlet pipe 212 and outlet pipe 213. A drain bushing 903 connects renovation drain 601 to the pipe of the yard drain. Lid 904 makes renovation drain 601 watertight. Renovation drain 601 is supported by placing gravel substance 905 on top of liner drain 100. Gravel substance 905 is located between renovation drain 601 and concrete drain 201 such that a dotted line 906 shows the upper surface of gravel substance 905. In this example gravel substance 905 is composed of granules which are made of plastic clay and which insulate heat. Because the granules float on water, a layer or foam concrete 907 is placed on them. Renovation drain 601 suits well for repairing concrete drain 201 when the yard drain pipe does not require repairing. If needed, renovation drain 601 is coupled with drain bushings to yard drain pipes coming from a number of yards.

Relating to the previous embodiments and figures it is stated that the pressurizing of liner drain 100 is performed with fluid (air, water) and liner 101 will harden over time but, depending on the composition of the compound, the hardening of liner 101 can be accelerated by heat, ultraviolet light, or blue light. While the invention has been described in connection with embodiments and implementations the invention further covers various modifications and equivalent arrangements within the following claims.

## Claims

1. A liner drain (100) for repairing a concrete drain, the liner drain (100) comprising
a liner (101) impregnated with a compound, the liner having a bottom (102), a wall (103), and a liner mouth (104),
**characterized in that** the liner drain (100) further comprises
a bushing (105) wherein, in use, the bushing (105) is located inside the concrete drain and retains its shape,
a collar (106) attaching the bushing permanently to the liner (101) and the liner mouth (104) is located at the bushing (105) and forms together with the bushing an inlet (107) into the liner and the liner is attached to the collar (106) around the liner mouth (104), and the liner has such dimensioning that a distance (108) from the bottom (102) of the liner to the bushing (105) is less than a distance from a drain bottom of the concrete drain to a drain mouth of the concrete drain.

2. The liner drain as claimed in claim 1, **characterized in that** the collar (106) and the bushing (105) are formed of a same material.

3. The liner drain as claimed in claim 1, **characterized in that** the collar is (106) formed of the liner (101).

4. The liner drain as claimed in claim 1, **characterized in that** the bushing (105) is made of one of following materials: plastic, polyvinylchloride, polyethylene, metal, aluminum, or stainless steel.

5. The liner drain as claimed in claim 1, **characterized in that** the wall (103) attached to the bottom (102) of the liner (101) is placed against an inner wall of the concrete drain.

6. The liner drain as claimed in claim 1, **characterized in that** the wall (103) attached to the bottom (102) of the liner (101) has a cross-section that is determined by an inner wall of an assembly mold (301).

7. The liner drain as claimed in claim 1, **characterized in that** the bushing (105) is intended to be coupled to a telescope pipe (401).

8. The liner drain as claimed in claim 1, **characterized in that** the liner drain comprises an inspection lid (501, 511) for covering the liner mouth (104).

9. The liner drain as claimed in claim 1, **characterized in that** the bushing (105) is intended to be coupled to a renovation drain (601).

10. A drain arrangement (700) for repairing a concrete drain (201) comprising
a liner drain (100) according to claim 1.

11. The drain arrangement as claimed in claim 10, **characterized in that** the drain arrangement comprises one of the following components: an assembly mold (301) for assembling the liner (101), a telescope pipe (401) attached to the bushing (105), an inspection lid (501, 511) for covering the liner mouth (104), renovation drain (601) attached to the bushing (105).

12. The drain arrangement as claimed in claim 10, **characterized in that** the drain arrangement comprises a deck (801) that is located between the bushing (105) and a drain wall (203) of the concrete drain (201) to be repaired.

## Patentansprüche

1. Ablauf (100) mit Auskleidung zum Reparieren eines Betonablaufs, wobei der Ablauf (100) mit Auskleidung aufweist:
eine mit einer Verbindung imprägnierte Auskleidung (101), wobei die Auskleidung einen Boden (102), eine Wand (103) und eine Auskleidungsöffnung (104) aufweist,
**dadurch gekennzeichnet, dass** der Ablauf (100) mit Auskleidung ferner aufweist:
eine Buchse (105), wobei sich die Buchse (105) bei der Verwendung im Inneren des Betonablaufs befindet und ihre Form beibehält,
einen Kragen (106), der die Buchse dauerhaft an der Auskleidung (101) befestigt, und die Auskleidungsöffnung (104) befindet sich an der Buchse (105) und bildet zusammen mit der Buchse einen Einlass (107) in die Auskleidung, und die Auskleidung ist an dem Kragen (106) um die Auskleidungsöffnung (104) herum befestigt, und die Auskleidung eine solche Abmessung hat, dass ein Abstand (108) von dem Boden (102) der Auskleidung zu der Buchse (105) geringer ist als ein Abstand von einem Ablaufboden des Betonablaufs zu einer Auskleidungsöffnung des Betonablaufs.

2. Ablauf (100) mit Auskleidung nach Anspruch 1, **dadurch gekennzeichnet, dass** der Kragen (106) und die Buchse (105) aus demselben Material hergestellt sind.

3. Ablauf (100) mit Auskleidung nach Anspruch 1, **dadurch gekennzeichnet, dass** der Kragen (106) aus der Auskleidung (101) gebildet ist.

4. Ablauf (100) mit Auskleidung nach Anspruch 1, **dadurch gekennzeichnet, dass** die Buchse (105) aus einem der folgenden Materialien hergestellt ist: Kunststoff, Polyvinylchlorid, Polyethylen, Metall, Aluminium oder Edelstahl.

5. Ablauf (100) mit Auskleidung nach Anspruch 1, **dadurch gekennzeichnet, dass** die am Boden (102) der Auskleidung (101) befestigte Wand (103) gegen eine innere Wand des Betonablaufs angeordnet ist.

6. Ablauf (100) mit Auskleidung nach Anspruch 1, **dadurch gekennzeichnet, dass** die am Boden (102) der Auskleidung (101) befestigte Wand (103) einen Querschnitt aufweist, der durch eine innere Wand einer Montageform (301) bestimmt ist.

7. Ablauf (100) mit Auskleidung nach Anspruch 1, **dadurch gekennzeichnet, dass** die Buchse (105) dazu bestimmt ist, mit einem Teleskoprohr (401) gekoppelt zu werden.

8. Ablauf (100) mit Auskleidung nach Anspruch 1, **dadurch gekennzeichnet, dass** der Ablauf mit Auskleidung einen Kontrolldeckel (501, 511) zur Abdeckung der Auskleidungsöffnung (104) aufweist.

9. Ablauf (100) mit Auskleidung nach Anspruch 1, **dadurch gekennzeichnet, dass** die Buchse (105) dazu bestimmt ist, mit einem Sanierungsablauf (601) gekoppelt zu werden.

10. Ablaufanordnung (700) zum Reparieren eines Betonablaufs (201), die einen Ablauf (100) mit Auskleidung nach Anspruch 1 aufweist.

11. Ablaufanordnung nach Anspruch 10, **dadurch gekennzeichnet, dass** die Ablaufanordnung einen der folgenden Bestandteile aufweist: eine Montageform (301) zum Zusammenbau der Auskleidung (101), ein an der Buchse (105) befestigtes Teleskoprohr (401), einen Kontrolldeckel (501, 511) zur Abdeckung der Auskleidungsöffnung (104), einen an der Buchse (105) befestigten Sanierungsablauf (601).

12. Ablaufanordnung nach Anspruch 10, **dadurch gekennzeichnet, dass** die Ablaufanordnung ein Deck (801) aufweist, das zwischen der Buchse (105) und einer Ablaufwand (203) des zu reparierenden Betonablaufs (201) angeordnet ist.

## Revendications

1. Drain à revêtement (100) pour réparer un drain en béton, le drain à revêtement (100) comprenant
un revêtement (101) imprégné d'un composé, le revêtement présentant un fond (102), une paroi (103), et une bouche de revêtement (104),
**caractérisé en ce que** le drain à revêtement (100) comprend en outre
un manchon (105) dans lequel, lors de l'utilisation, le manchon (105) est situé à l'intérieur de le drain en béton et conserve sa forme,
un collier (106) fixant le manchon de manière permanente à le revêtement (101) et la bouche de revêtement (104) est située au niveau de le manchon (105) et forme conjointement avec le manchon une entrée (107) dans le revêtement et le revêtement est fixé au collier (106) autour de la bouche de revêtement (104), et le revêtement présente un dimensionnement tel qu'une distance (108) à partir du fond (102) de le revêtement vers le manchon (105) est inférieure à une distance à partir d'un fond de drain de le drain en béton vers une bouche de drain de le drain en béton.

2. Drain à revêtement selon la revendication 1, **caractérisé en ce que** le collier (106) et le manchon (105) sont formés d'un même matériau.

3. Drain à revêtement selon la revendication 1, **caractérisé en ce que** le collier (106) est formé de le drain (101).

4. Drain à revêtement selon la revendication 1, **caractérisé en ce que** le manchon (105) est composé d'un des matériaux suivants : plastique, chlorure de polyvinyle, polyéthylène, métal, aluminium, ou acier inoxydable.

5. Drain à revêtement selon la revendication 1, **caractérisé en ce que** la paroi (103) fixée au fond (102) de le revêtement (101) est placée contre une paroi intérieure de le drain en béton.

6. Drain à revêtement selon la revendication 1, **caractérisé en ce que** la paroi (103) fixée au fond (102) de le revêtement (101) présente une section transversale qui est déterminée par une paroi intérieure d'un moule d'assemblage (301).

7. Drain à revêtement selon la revendication 1, **caractérisé en ce que** le manchon (105) est destiné à être accouplée à un tuyau télescopique (401).

8. Drain à revêtement selon la revendication 1, **caractérisé en ce que** le drain à revêtement comprend un couvercle d'inspection (501, 511) pour couvrir la bouche de revêtement (104).

9. Drain à revêtement selon la revendication 1, **caractérisé en ce que** le manchon (105) est destiné à être accouplée à un drain de rénovation (601).

10. Agencement de drain (700) pour réparer un drain en béton (201) comprenant un drain à revêtement (100) selon la revendication 1.

11. Agencement de drain selon la revendication 10, **caractérisé en ce que** l'agencement de drain comprend un des composants suivants : un moule d'assemblage (301) pour assembler le revêtement (101), un tuyau télescopique (401) fixé à le manchon (105), un couvercle d'inspection (501, 511) pour couvrir la bouche de revêtement (104), un drain de rénovation (601) fixé à le manchon (105).

12. Agencement de drain selon la revendication 10, **caractérisé en ce que** l'agencement de drain comprend un pont (801) qui est situé entre le manchon (105) et une paroi de drain (203) de le drain en béton (201) à réparer.
